# EUROPÄISCHE PATENTSCHRIFT

(11) **EP 0 737 540 B1**
(45) Veröffentlichungstag und Bekanntmachung des Hinweises auf die Patenterteilung: **12.07.2000**
(21) Anmeldenummer: 96103849.4
(22) Anmeldetag: 12.03.1996
(51) Int. Cl.: B23P 15/14, B21K 1/30

(54) **Verfahren zur Herstellung von Getriebebauteilen mit Spezialverzahnung, insb. Synchronverzahnung**
Method for making transmission parts with special teeth, in particular synchronisation teeth
Méthode de production des pièces de transmission avec denture spéciale, en particulier une denture de synchronisation

(30) Priorität: 10.04.1995 CH 102795
(43) Veröffentlichungstag der Anmeldung: 16.10.1996
(73) Patentinhaber: FEINSTANZ AG, 8640 Rapperswil SG (CH)
(72) Erfinder: Bernet, Alois, CH-8122 Binz (CH)
(74) Vertreter: Petschner, Goetz

(56) Entgegenhaltungen:
- EP-A- 0 250 312
- JP-A- 3 094 949
- PATENT ABSTRACTS OF JAPAN vol. 015, no. 276 (M-1135), 12.Juli 1991 & JP-A-03 094949 (F C C:KK), 19.April 1991,

## Beschreibung

Die vorliegende Erfindung betrifft ein Verfahren zur Herstellung von Getriebebauteilen mit Spezialverzahnung, insb. Synchronverzahnung, wie Synchron-Ringe oder Kupplungskörper für Schaltgetriebe im Fahrzeugbau gemäß dem Oberbegriff des Anspruches 1 (EP-A- 250312).

Eine herstellungstechnische Problemstelle bei Synchron-Schaltgetrieben sind die Getriebebauteile mit Synchronverzahnung, welche Zähne in Radialsicht Dachform aufweisen und hinterschnitten sind und so einer komplizierten Herstellung durch Zerspanen in mehren Arbeitsgängen, wie Räumen und Fräsen, unterliegen.

Nachteilig bei solchen Verzahnungen ist zudem, dass die in vorgenannter Weise bearbeiteten Zahnflächen, insbesondere Zahnflanken, relativ starke Zerspanungsriefen aufweisen, was zu einem relativ grossen Verschleiss bei den Schaltvorgängen am Getriebe führt. Ferner ist die Entsorgung der beim Zerspanen entstehenden öl- oder emulsionshaltigen Späne aufwendig.

Aufgabe der vorliegenden Erfindung ist nun die Schaffung eines Verfahrens, das eine wesentlich einfachere und zudem bezüglich Verschleiss-Festigkeit optimierte Herstellung von Getriebebauteilen der vorgenannten Art erlaubt.

Die Lösung wird erfindungsgemäss durch die Merkmale des Anspruchs 1 erreicht. Die Getriebebauteile werden auf einer Feinschneidmaschine je aus einem Materialstreifen herausgeschnitten bei gleichzeitiger Anformung einer Verzahnung aus radialen, wenigstens angenähert quaderförmigen, für die Ausprägung der Zähne bestimmten Abragungen mit einem vorgegebenen Verhältnis von Zahnhöhe zur geringsten Breite der Zähne. Dann werden die Abragungen im Prägeverfahren zu den Zähnen mit Dachform und Hinterschnitt ausgeformt. Danach wird dann der durch das Prägen entstandene Material-Überlauf resp. Grat mittels eines Stanzwerkzeuges abgetrennt und dann die Zähne im Gleitschliff-Verfahren entgratet und die Kanten wenigstens teilweise gerundet werden.

Diese Massnahmen können in Folge- oder Einzelschritten durchgeführt werden. Hierbei wird durch den verformenden Prägevorgang eine Materialverfestigung an der Zahnoberfläche sowie dort hohe Glätte mit geringster Rautiefe erreicht. Ferner lässt sich so eine zur Zahnmitte hin vergleichsweise hohe Massgenauigkeit der Dachform, die symmetrisch oder assymmetrisch sein kann, erreichen. Zusätzlich den gerundeten Kanten lassen sich dann solche Getriebe schneller, geräuschärmer und kraftsparender schalten.

Durch diese Massnahmen wird also nicht nur eine äusserst kostengünstige Herstellung solcher Getriebebauteile mit Spezialverzahnung, insb. Synchronverzahnung, wie Synchron-Ringe oder Kupplungskörper für Schaltgetriebe im Fahrzeugbau, sondern zudem eine bisher nicht erreichbare Präzision der Zahnform und der Zahnfestigkeit möglich.

Eine beispielsweise Ausführungsform des Erfindungsgegenstandes ist nachfolgend anhand der Zeichnung näher erläutert. Es zeigen:

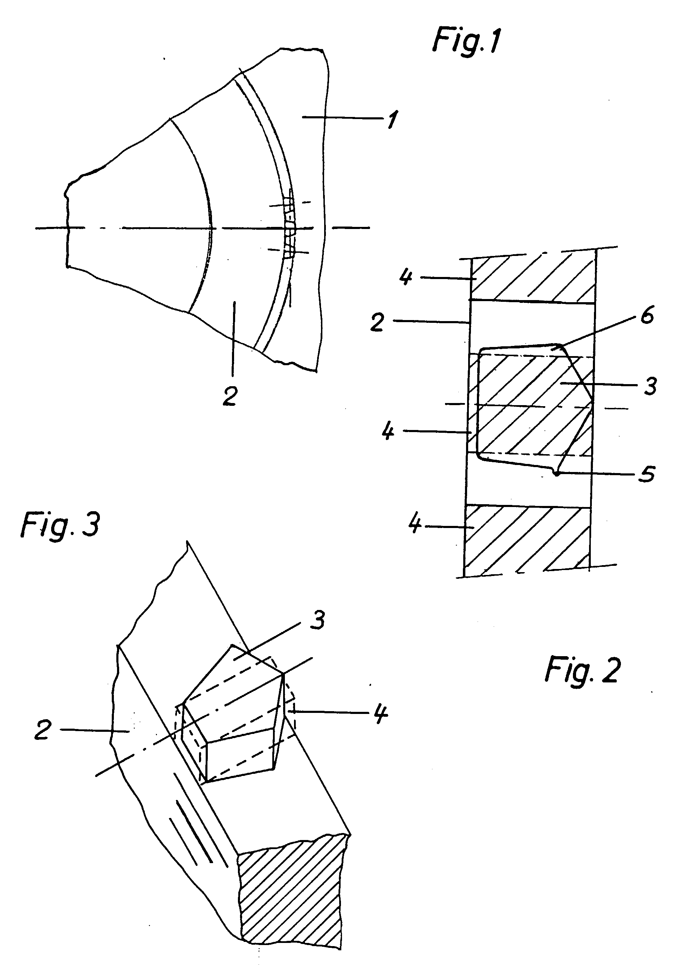

- Fig. 1: ausschnittweise in Draufsicht einen Materialstreifen zur Veranschaulichung, wie Getriebebauteile in Form von Synchron-Ringen o. dgl. auf einer Feinschneidmaschine herausgeschnitten werden; und
- Fig. 2 und 3: in Draufsicht resp. in schaubildartiger Darstellung in grösserem Massstab zur Veranschaulichung, dass die Verzahnung aus radialen, wenigstens angenähert quaderförmigen, für die Ausprägung der Zähne bestimmten Abragungen mit einem vorgegebenen Verhältnis von Zahnhöhe zur geringsten Breite der Zähne besteht; und dass dann die Abragungen im Prägeverfahren zu den Zähnen mit Dachform und Hinterschnitt ausgeformt werden.

Gemäss Fig. 1 wird das Getriebebauteil 2, hier in Form eines Synchron-Ringes für ein nicht näher gezeigtes Automobil-Schaltgetriebe, zunächst auf einer ebenfalls nicht näher gezeigten Feinschneidmaschine aus einem Materialstreifen 1 herausgeschnitten und zwar mit einer Verzahnung aus radialen, wenigstens angenähert quaderförmigen, für die Ausformung der Zähne 3 bestimmten Abragungen 4 von der Höhe der Zähne und von einer geringsten Breite der Zähne, wie das die Fig. 2 und 3 näher im Einzelnen zeigen.

Diese Abragungen 4 werden dann im Prägeverfahren zu den Zähnen 3 mit Dachform und Hinterschnitt gleichzeitig ausgeformt.

Danach wird der durch das Prägen und Ausformen entstandene Material-Überlauf 5 mittels Stanzwerkzeug abgetrennt (in Fig. 2 nur an einer Stelle gezeigt).

Nachfolgend werden dann die Zähne 3 im Gleitschliff-Verfahren entgratet und die Kanten 6 wenigstens teilweise gerundet.

Diese Massnahmen können in Folge- oder Einzelschritten durchgeführt werden.

Durch den verformenden Prägevorgang wird eine Materialverfestigung an der Zahnoberfläche sowie dort hohe Glätte mit geringster Rautiefe erreicht. Ferner lässt sich so eine vergleichsweise präzisere Dachform erreichen. Zusätzlich den gerundeten Kanten lassen sich Getriebe mit solchen Getriebebauteilen schneller, geräuschärmer und kraftsparender schalten.

## Patentansprüche

1. Verfahren zur Herstellung von Getriebebauteilen mit Spezialverzahnung mit Zähnen mit Dachform und Hinterschnitt, insb. Synchronverzahnung, wie Synchron-Ringe oder Kupplungskörper für Schaltgetriebe im Fahrzeugbau, wobei
mit einem ersten Verfahrensschritt die Getriebebauteile auf einer Feinschneidmaschine je aus einem Materialstreifen herausgeschnitten werden bei gleichzeitiger Anformung einer Verzahnung aus radialen, wenigstens angenähert quaderförmigen, für die Ausprägung der Zähne bestimmten Abragungen und dass dann mit einem weiteren Verfahrensschritt die Abragungen im Prägeverfahren unter Materialverfestigung zu den Zähnen mit Dachform und Hinterschnitt ausgeformt werden, dadurch gekennzeichnet, dass die Abragungen ein vorgegebenes Verhältnis von Zahnhöhe zur geringsten Breite der Zähne aufweisen, und nach dem weiteren Verfahrensschritt der durch das Prägen entstandene Material-Überlauf abgestanzt wird.

2. Verfahren nach Anspruch 1, dadurch gekennzeichnet, dass dann die Zähne im Gleitschliff-Verfahren entgratet und die Kanten wenigstens teilweise gerundet werden.

## Claims

1. Method of producing gear components with special toothing with teeth with a roof shape and an undercut, especially synchromesh toothing, such as synchromesh rings or coupling bodies, for speed-change transmissions in vehicle construction, wherein in a first method step the gear components are each cut out on a precision cutting machine from a respective material strip with simultaneous shaping of a toothing of radial, at least approximately block-shaped projections intended for the stamping out of the teeth and that then in a further method step the projections are formed in a stamping process, with material hardening, into teeth with a roof shape and an undercut, characterised in that the projections have a preset ratio of tooth height to the smallest width of the teeth and after the further method step the material excess arising by the stamping is removed by punching.

2. Method according to claim 1, characterised in that the teeth are then deburred in a grinding process and the edges are at least partly rounded.

## Revendications

1. Procédé de fabrication de pièces de transmission avec denture spéciale, avec des dents en forme de toit et à contre-dépouille, notamment avec une denture de synchronisation, comme des disques du dispositif de synchronisation ou des corps d'accouplement pour des boîtes de vitesse dans la construction automobile, où lors d'une première étape de procédé, les pièces de transmission sont découpées sur une machine de coupe de précision respectivement d'une bande de matériau, avec un formage simultané d'une denture à partir de saillies radiales, au moins approximativement en forme de parallélépipède, prévues pour l'estampage des dents et en ce que, lors d'une autre étape de procédé, les saillies sont formées selon le procédé d'estampage, avec un durcissement du matériau, en dents ayant une forme de toit et une contre-dépouille , caractérisé en ce que les saillies ont un rapport prédéterminé de hauteur de dent à la largeur la plus réduite des dents et en ce que, selon l'étape de procédé suivante, l'excès de matériau produit par l'estampage est découpé.

2. Procédé selon la revendication 1, caractérisé en ce qu'ensuite, la bavure des dents est supprimée par un procédé de polissage coulissant et les arêtes sont au moins partiellement arrondies.
